# EUROPEAN PATENT SPECIFICATION

(11) **EP 1 635 173 B1**
(45) Date of publication and mention of the grant of the patent: **27.02.2008**
(21) Application number: 05107215.5
(22) Date of filing: 04.08.2005
(51) Int. Cl.: G01N 30/60

(54) **Column with tapered intermediate piece**
Kolonne mit konischem Zwischenstück
Colonne avec pièce intermédiaire conique

(43) Date of publication of application: 15.03.2006
(73) Proprietor: Agilent Technologies, Inc., Santa Clara, CA 95051 (US)
(72) Inventor: HAERTL, Hans-Georg, 76227, Karlsruhe (DE)
(74) Representative: Barth, Daniel Mathias

(56) References cited:
- EP-A- 0 106 419
- WO-A-99/62609
- DE-A1- 3 424 787
- US-A- 4 070 284
- US-A- 4 719 011
- US-A- 4 759 843
- US-B1- 6 171 502

## Description

### BACKGROUND ART

The present invention relates to an intermediate piece for a column.

A separation column is commonly used in liquid chromatography and may comprise a column tube filled with solid particles forming a stationary phase. Such a packet column may be equipped at both ends with special fittings, via which it can be connected to the analytical measurement instrument, such as the chromatograph. During operation, such columns may be subjected to high pressures of, for instance, up to 400 bar and more. A prior art separation column is disclosed in US 5,651,886.

Fittings for separation columns are commercially available and are offered, for instance, by the company Isolation Technology (see http://www.iso-tech.com) or by the company Swagelok (see for instance http:/twww.swagelok.com).

In known configurations, a column tube is filled with fluid separation material (so-called "beads"), and then an intermediate piece for providing a sufficiently pressure stable connection may be connected with the column tube. Furthermore, this arrangement may be fastened by connecting a fitting element to the column tube with the intermediate piece sandwiched therebetween.

Chromatographic column with respective fitting elements are disclosed e.g. in EP0106419A2, DE3424787A1, WO99/62609A1 US6,171,502B1, US4,759,843, US4,719,011, and US4,070,284, the latter disclosing the features of the preamble to claim 1.

### DISCLOSURE

It is an object of the invention to provide an improved intermediate piece for a column. The object is solved by the independent claims. Further embodiments are shown by the dependent claims.

According to an exemplary embodiment of the present invention, an intermediate piece is provided for (for instance pressure-stable, sealing and tight) connection between a column tube, adapted for containing a fluid separation material (for instance so called beads, which may be made of a silica gel material) for separating different compounds of a fluid, and a fitting element adapted for fitting the column tube to another element (for instance an analytical measurement instrument, such as a chromatograph) within a fluid path (the other element may be located upstream and/or downstream of a fluid or analyt including compounds to be separated), the intermediate piece comprising a tapered section (which may be tapered inwardly or outwardly with respect to the fluid flow, for properly distributing the fluid within the fluid separation material or collimating the fluid having passed the fluid separation material) adapted for spatially distributing the fluid between the fitting element and the column tube.

According to another exemplary embodiment, a (separation) column for analyzing a fluid (which may comprise gaseous and/or liquid and/or solid contributions) is provided, the column comprising a column tube, a fitting element, and an intermediate piece having the above mentioned features for connection between the column tube and the fitting element.

According to still another exemplary embodiment, a fluid separation system (like a liquid chromatography device, for instance a "High Performance Liquid Chromatography" device (HPLC)) for separating compounds of a fluid is provided, the fluid separation system comprising an intermediate piece having the above mentioned features and/or a column having the above mentioned features.

According to yet another exemplary embodiment, a method of manufacturing an intermediate piece for connection between a column tube, adapted for containing a fluid separation material for separating different compounds of a fluid, and a fitting element adapted for fitting the column tube to another element within a fluid path is provided, the method comprising forming a tapered section of the intermediate piece adapted for spatially distributing the fluid between the fitting element and the column tube.

According to still another exemplary embodiment, a method of spatially distributing a fluid to be transported between a column tube, adapted for containing a fluid separation material for separating different compounds of a fluid, and a fitting element adapted for fitting the column tube to another element within a fluid path is provided, the method comprising transporting the fluid through a tapered section of the intermediate piece adapted for spatially distributing the fluid between the fitting element and the column tube.

According to an exemplary embodiment, an intermediate piece is provided as some kind of bridge or interface or adapter between a column tube and a fitting element (or between a fitting element and a column tube), wherein the intermediate piece may contribute to the pressure stability and/or to a tight and sealed connection between the elements sandwiching the intermediate piece. Thus, a fluid, for instance a liquid analyt, which is pumped through a column, can be pumped also with a very high pressure of some hundred bar, for instance 600 bar to 1000 bar and more, and simultaneously the liquid may be guided properly through the system.

Particularly, the fluid may be properly distributed of over a whole diameter of the column tube which may be filled with fluid separation material. Furthermore, the fluid flow having passed the column may be properly focussed so as to be transported into a capillary connected to a fitting element positioned downstream a column tube. Thus a spreading or narrowing of the fluid flow may be accurately defined by means of the tapered section of the intermediate piece(s). This may ensure a proper distribution of the fluid over an entire diameter of the column tube including the fluid separation material, and may ensure an accurate definition of the fluid flow at a downstream end of the separation column.

Beyond this, the device according to an embodiment may be cheap in manufacture and may allow for a secure fastening of the different elements.

Particularly, a tapered section may be provided - not (only) in the fitting element and not (only) in the column tube - but in the intermediate piece. From the hydrodynamic point of view and in the light of the aim to properly distribute the fluid over the entire inner diameter of the column tube, this is a particularly appropriate position of such a tapered section.

When liquid is pumped through a column, the liquid coming from a connected other element (for instance a connected chromatograph) may flow in the tapered section designed in such a manner that, in the flow direction, the diameter of the tapered section continuously increases. Thus, the fluid flow may be broadened by the correspondingly shaped tapered section.

However, when the fluid has passed the fluid separation material, a mirror symmetrically oriented further tapered section may be provided in another intermediate piece, so that, in the fluid direction, the fluid enters the high diameter portion of the further intermediate piece and is then concentrated to a smaller diameter portion of the tapered section. By taking this measure, the fluid flow may be controlled or regulated.

The intermediate piece according to an embodiment may find application, for instance, in liquid chromatography. In a liquid chromatograph, an analyte or fluid is introduced in a column bore filled with a fluid separation material. For closing (an) end(s) of the column tube, a connection piece or closing piece or termination piece may be provided which may prevent the packing material filled in the column tube from being removed from the column tube. Such an undesirable removal may be promoted, for instance, by the streaming force of analyzed fluid pumped through the column.

For properly closing the ends of the column tube, the intermediate piece may be designed as some kind of adaptor between the column tube and a fitting element which may then, in tum, be connected to another element. For a pressure stable coupling of the various elements of the column, the column tube is connected to the fitting element as an end piece of such a configuration. The fitting element may have the function to enable a fluid communication with the connected other element. With the configuration according to an embodiment, in which a tapered section is provided in an intermediate piece as a sealing element, a high pressure stable fitting can be manufactured with low costs.

Furthermore, a tapered geometry, for instance with a cone like shape, may avoid that fluid and/or fluid separating material clogs or blocks canals or capillaries.

The intermediate piece may be put like a cap onto an end portion of the column tube. Then, the fitting element may be fastened with the column tube so that the intermediate piece may be pressed between the fitting element and the column tube. When such a pressure is effected on the intermediate piece, and when the intermediate piece is made of a material (like PEEK) which is sufficiently soft and stable, then such a pressure may have the consequence that the intermediate piece may be deformed without being pushed out of the position between the fitting element and the column tube. However, such a slightly resilient intermediate piece may be slightly deformed under the applied fastening pressure so as to provide for a secure sealing which closes also very small pores between the fitting element and the column tube. Simultaneously, this configuration prevents that the intermediate piece is pressed out of the assembled apparatus, so that a tight and reliable connection may be achieved.

According to an exemplary embodiment, it may be advantageous to appropriately select the opening angle of a cone-like tapered section. For instance, an angle of 118.2° or 120° is a good compromise between a desired sufficiently small dead volume (or void volume) within the intermediate piece on the one hand and proper distribution properties on the other hand. In other words, the geometrical configuration of the intermediate piece may be so that a sleeve element of the intermediate piece may be made of a sufficiently soft material (like PEEK, PolyEtherEtherKetone) which is very suitable for this purpose. This may have the consequence that the sleeve element may not flow away which may result in a proper pressure stability. The sleeve or cap may be deformable so as to provide a proper tightening or sealing element.

According to an exemplary embodiment, a conical portion in a transition element may be provided, but not in the fitting element (that is to say in the end screwing element). Thus, a sealing may be located between the column element and the end screw element, the sealing having a conically flared inner region.

Thus, according to an exemplary embodiment, a PEEK column cap with a distribution cone may be provided, which may be used in the context of fittings of separation columns. Consequently, an adaptor between the column and a connected equipment may be obtained.

In the following, further exemplary embodiments will be described.

Next, exemplary embodiments of the intermediate piece will be described. However, these embodiments also apply for the column, for the fluid separation system, for the method of manufacturing an intermediate piece and for the method of spatially distributing a fluid.

The intermediate piece may comprise a flow-through element having an open channel through which the fluid is transportable. Such a flow-through element may be an element of a sufficiently stable material (for instance made of stainless steel) having some kind of capillary or canal through which a fluid may be pumped. According to an exemplary embodiment, this flow-through element may have a first portion having a constant diameter (for instance forming a cylindrical tube) and may have a second portion with a tapered shape. A connection between the portion having the constant diameter and the tapered section may be a portion of the tapered section in which the tapered section has the smallest diameter.

The tapered section may be formed in or may be part of the flow-through element. This flow-through element may be a separate element which may be fixedly or detachably removably or insertable in a sleeve which may have a central bore for receiving the flow-through element.

Furthermore, the intermediate piece may comprise a frit element which may be adapted for retaining the fluid separation material within the column tube, and which may have pores through which the fluid is transportable. A frit element may be a sintered member having canals or openings or pores with a particularly defined size or distribution of sizes. This size should be small enough to prevent beads of the fluid separating material from being transported through the pores of the frit element. On the other hand, the frit element should have pores which are large enough to let components of the fluid to be analyzed pass through the pores.

The tapered section may be formed in the frit element. For this purpose, the frit element may have a recess which has a tapered geometry. This recess may be located adjacent a flow-through element and opposing the column tube. The flow-through element and the frit element may be formed as a common member, or may be two separate elements. When the tapered section is formed in the frit element, a flow-through element may be dispensible and may thus be omitted.

The intermediate piece may further comprise a sleeve element which may have a through hole, wherein the flow-through element and the frit element may be insertable in or are inserted in the through hole. This through hole may have, for instance, one or two portions of different diameters. In one configuration, the sleeve element may have a through hole with a constant diameter. Then, the frit element and the flow-through element may both be inserted in the through hole of the sleeve element. On the other hand, it is also possible that the sleeve element has a first portion with a small diameter for letting the fluid coming from a connected other element flow through, and may have a larger diameter for receiving the frit element and the flow-through element. Alternatively, the flow-through element and/or the frit element may be integrally formed with the sleeve.

The sleeve element may have a first connection portion which may be designed to be engageable by the fitting element so as to provide a sealing. In other words, the sleeve element may be configured such that it can be inserted in a receiving portion of the fitting element.

Additionally or alternatively, the sleeve element may have a second connection portion which may be designed for engaging the column element so as to provide a sealing. In other words, it may be possible that the sleeve element can be put as some kind of cap on the column element.

For operating such a configuration, the column element may first be filled with the fluid separating material. Then, the sleeve element may be equipped with the flow-through element and/or the frit element. This mounted intermediate piece may then be put on the top of the column element to close an end thereof. For connecting the column element attached to the intermediate piece to the fitting element, the fitting element may be put onto the intermediate piece so as to engage the sleeve element. Then, it is possible that the components thus connected are fastened to form a pressure stable assembly.

At least a part of the tapered section may be formed with one of the group consisting of a constant slope, a monotonically increasing slope and a monotonically decreasing slope. For instance, it is possible that the tapered section is widened up with increasing or decreasing slope along its entire extension or along a part of its extension, with respect to a fluid transport direction. However, the tapered section may also have a part having a constant slope or may be formed with a constant slope along its entire extension. Thus, the tapered section may or may not have a curvature.

The tapered section may have an opening angle between 100° and 140°, particularly between 115° and 125°, more particularly essentially 120° (which shall mean about 120°, for instance 118.2°, but not necessarily precisely 120°). In this range of opening angles, a proper compromise between a sufficiently small dead volume and a proper distribution of the fluid over the entire extension of the fluid separating material may be obtained.

The flow-through element may be made of a chemically inert material, for instance a material of the group consisting of a metallic material, stainless steel, a ceramics material, and a carbon-filled plastics material. When the material of the flow-through element is selected from such a group of materials, then the intermediate piece may be used for a long time within a separating column without any chemically-induced deterioration or modification of the surface properties of the intermediate piece.

The frit element may be made of a sintered material, particularly of sintered stainless steel. The use of such a material may have the advantage that the pores may be properly defined and the frit element of such a material may be manufactured with low cost.

The sleeve element may be made of a plastics material, particularly of PolyEtherEtherKetone (PEEK). This material is chemically inert and sufficiently soft to provide for a tight sealing when the intermediate element is connected between the fitting element and the column tube.

The other element (for instance the chromatograph) may be located upstream with respect to the column tube. In other words, the tapered section may be provided particularly between the other element and the column tube so as to support the distribution of the fluid over the entire inner diameter of the column tube.

In the following, further exemplary embodiments of the column will be explained. However, these embodiments also apply for the intermediate piece, for the fluid separation system, for the method of manufacturing an intermediate piece, and for the method of spatially distributing a fluid.

In such a column for analyzing a fluid, the fitting element may comprise a first fastening element and the column tube may comprise a second fastening element, wherein the fitting element may be fastenable at the column tube by means of fastening the first fastening element at the second fastening element in an operation state in which the intermediate piece engages the column tube and is engaged by the fitting element. In such a configuration, the column may be mounted by first filling the material in the column tube. Then, the column tube may be closed by means of the intermediate piece (at one or both end portions thereof). Subsequently, a fitting element may be connected by putting it onto the end of the column tube being already covered with the intermediate element. One or two fitting elements may be provided, in the latter case a symmetric configuration may be obtained. Then, the entire arrangement may be fastened by means of the first fastening element and by means of the second fastening element.

For instance, the first fastening element and the second fastening element may form a screw connection between the fitting element and the column tube. For this purpose, the fitting element may, for instance, have an inner thread, and the column tube may have a correspondingly formed outer thread. However, alternatively to this configuration, other types of fastening means are possible, like for instance a snap-in connection, a connection implementing a magnetic fastening element or a hook and loop fastener. Other mechanical fastening elements for fastening the fitting element to the column tube are possible.

The column may further comprise a further intermediate piece and may comprise a further fitting element, wherein the column tube may have a first end portion and a second end portion. The intermediate piece and the fitting element may be connectable at the first end portion and the further intermediate piece and the further fitting element may be connectable at the second end portion in a symmetric manner with regard to the first end portion. By this configuration, an arrangement "fitting element - intermediate element - column tube - further intermediate element - further fitting element" may be assembled, wherein such an arrangement may be connected at both end portions to another element (for instance to two connected parts of an analytical measurement instrument, such as a chromatograph). This symmetric configuration may have the advantage that only three different members have to be formed, since the two intermediate pieces may be manufactured identical and the two fitting elements may be manufactured identical. This may reduce the costs.

In the following, further exemplary embodiments of the fluid separation system will be described. However, these embodiments also apply for the intermediate piece, for the column, for the method of manufacturing an intermediate piece and for the method of spatially distributing a fluid.

The fluid separation system may be adapted to analyze at least one physical, chemical and/or biological parameter of at least one component of the fluid (to be analyzed by means of the fluid separation system). Examples for physical parameters are temperature, pressure, volume or the like. Examples for chemical parameters are concentrations, a pH-value, or the like. Examples for biological parameters are presence or absence of proteins or genes in a solution, biological activity of a sample, or the like. However, according to the described embodiment, at least one of the parameters may be sensed, detected or measured by the fluid separation system.

The fluid separation system may comprise at least one of a sensor device, a test device for testing a device under test or a substance, a device for chemical, biological and/or pharmaceutical analysis, a capillary electrophoresis device, a liquid chromatography device, a gas chromatography device, an electric measurement device, and a mass spectroscopy device. Further exemplary application fields of the fluid separation system can be gas chromatography, mass spectroscopy, UV spectroscopy, optical spectroscopy, IR spectroscopy, liquid chromatography, and capillary electrophoresis bioanalysis.

More generally, the device according to embodiments may be integrated in an analysis device for chemical, biological and/or pharmaceutical analysis (like a HPLC). Such an analysis device may be a fluid separation device, a liquid chromatography system, an electrophoresis system, or the like. When the apparatus is a device for chemical, biological, and/or pharmaceutical analysis, functions like (protein) purification, electrophoresis investigation of solutions, fluid separation, or chromatography investigations may be performed by means of the fluid separation system.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 shows a column according to an exemplary embodiment of the invention.

Fig. 2 shows an enlarged section of a portion of the column of Fig. 1.

Fig. 3 shows a three-dimensional view of the column of Fig. 1.

Fig. 4A to Fig. 4C show intermediate pieces according to exemplary embodiments.

Fig. 5 shows an intermediate piece according to an exemplary embodiment.

The illustration in the drawing is schematically.

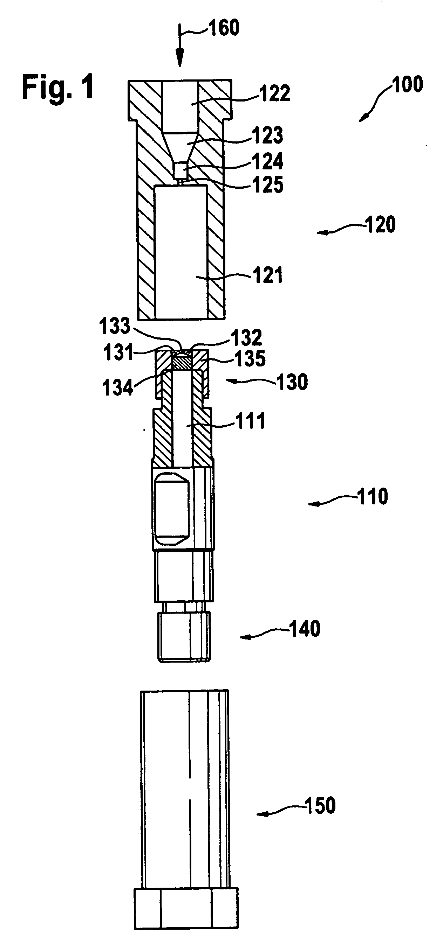

In the following, referring to **Fig. 1**, a separation column 100 according to an exemplary embodiment will be described.

The separation column 100 is adapted for analyzing a fluid, for instance a biochemical solution comprising a plurality of protein fractions. The separation column 100 comprises a column tube 110, a first fitting element 120, a first intermediate piece 130 for connection between the column tube 110 and the first fitting element 120, a second separation element 140, and a second fitting element 150. The second intermediate piece 140 is adapted for connection between the column tube 110 and the second fitting element 150. A fluid flow direction is indicated in Fig. 1 as an arrow 160.

In the following, a detailed description of the first fitting element 120, of the first intermediate piece 130 and of the column tube 110 will be provided. However, a detailed description for the second intermediate piece 140 will be omitted, since its constitution is mirror symmetric (that is to say identical) to the constitution of the first intermediate piece 130. Similarly, the constitution of the second fitting element 150 is identical (and the arrangement is mirror symmetrical) with respect to the first fitting element 120.

The first intermediate piece 130 is adapted for connection between the column tube 110, which is adapted for containing silica gel beads filled in a receiving tube 111 (or inner bore) and which is adapted for separating different components of the fluid, and the first fitting element 120 which is adapted for fitting the column tube 110 to a chromatograph which is not shown in Fig. 1 and which is arranged upstream of the first fitting element 120 with respect to the fluid path 160, that is to say above the first fitting element 120.

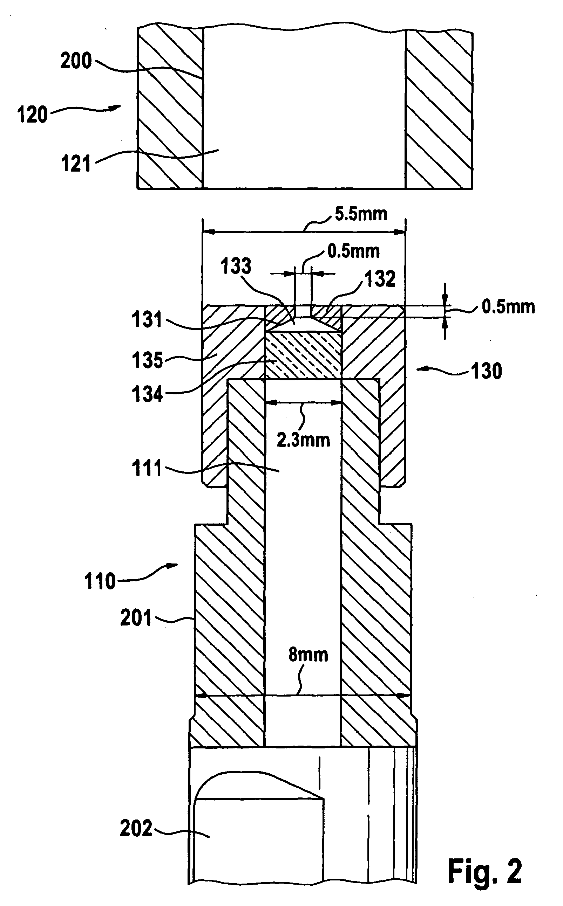

The first intermediate piece 130 has a tapered section 131 which is shown in more detail in Fig. 2. The tapered section 131 is adapted for spatially distributing the fluid flowing between the first fitting element 120 and the column tube 110.

The first intermediate piece 130 comprises a flow-through element 132 (which is shown in more detail in Fig. 2) and which has an open channel 133 through which the fluid is transportable. As can be seen better in Fig. 2, the tapered section 131 is formed centrally in the flow-through element 132.

Furthermore, the first intermediate piece 130 comprises a frit element 134 which is adapted for retaining the fluid separation material within the column tube 110, wherein the frit element 134 has pores through which the fluid is transportable.

Beyond this, the first intermediate piece 130 comprises a sleeve element 135 which has a through hole, wherein the flow-through element 132 and the frit element 134 are inserted in the through hole of the sleeve element 135. However, the flow-through element 132 as well as the frit element 134 are provided detachably or removably from the through hole of the sleeve element 135.

Fig. 1 shows the first intermediate piece 130 in an operation state in which it is mounted on top of an end portion of the column tube 110. The sleeve element 135 has a portion with a larger diameter bore (compared to the through hole diameter), forming a reception for receiving a correspondingly shaped end portion of the column tube 110.

Furthermore, the sleeve element 135 has a connection portion which is engageable by the first fitting element 120 in a sealed manner. In other words, the fitting element has a bore 121 which is shaped and dimensioned in such a manner that the outer portion of the sleeve 135 almost abuts at the walls within the bore 121 of the first fitting element 120 for a sufficiently tight connection, when the first fitting element 120 is moved downwards starting from the configuration shown in Fig. 1.

In the following, the fluid flow path which is passed by fluid flowing in the direction 160 of the separation column 100 will be described in more detail.

The fluid is introduced in the separation column 100 by means of a pump (not shown) which allows to press the fluid with a pressure of some hundred bar in the arrangement shown in Fig. 1. The fluid then enters the first fitting element 120 which may be manufactured of stainless steel. As can be taken from Fig. 1, different sections 122 to 125 are formed in the interior of the first fitting element 120. Sections 122 to 124 are provided for connecting a capillary to the column 100 (and may thus serve for a capillary fitting and a capillary itself). First, a portion 122 with a constant diameter is provided. Then, a portion 123 having an inwardly tapered inner cross section is provided. After that, a portion 124 having a constant diameter and being cylindrical in shape is provided. Then, the fluid flows from the capillary through a portion 125 with a constant diameter. The capillary ends where the portion 125 starts. The diameter of the portion 125 is adapted to the diameter of a portion of the flow through element 132 having a constant diameter. Thus, the two dimensions of the adjacent parts of elements 125 and 133 are matched to one another.

The fluid flowing in the direction 160 shall then be forced to flow through the fluid separation material in the cylindrical bore 111 of the column tube 110 in such a manner that the entire fluid separation material is brought in interaction with the fluid. For this purpose, the tapered section 131 is provided with an appropriate opening angle of, for instance, slightly less than 120°. The fluid which has flown through the flow-through element 132 then flows through the porous frit 134 of the intermediate piece 130. After that, the fluid enters the tubular bore 111 of the tube element 110. In this tubular bore 111, the fluid separating material (for instance silica gel) is present and separates different components of the fluid in a manner as known by a person skilled in the art of liquid chromatography.

At the end of the tube 111, the configurations of the second intermediate piece 140 and of the second fitting element 150 are such that an inverse functionality may be provided as compared to components 120, 130. At the end of the second fitting element 150, the separated fluid is connected to further components of a liquid chromatograph (not shown).

In the following, referring to **Fig. 2**, further details of the described arrangement will be described.

Particularly, reference numeral 200 in Fig. 2 denotes an inner thread of the fitting element 120 to be connected to an outer thread 201 of the column tube 110 for fastening the column tube 110 to the first fitting element 120 to provide a tight and pressure stable connection which is supported by means of the first intermediate piece 130. In order to simplify such a screw connection, a tool engaging surface 202 is provided at the column tube 110 which may allow a user, by means of a screwing tool, to fasten the first fitting element 120 to the column tube 110.

The cap 135 may be made of a PEEK material. The distribution cone 132 may be made of a (bio-)chemically inert material, like stainless steel, a ceramics, a carbon material, or a filled plastics material. The hardness of the distribution cone 132 should be higher than the hardness of the PEEK material of the cap 135. The frit element 134 may be made of a sintered porous stainless steel, having for instance pores with dimensions of essentially less than the bead size of, for instance, 1.8 µm. The pore size should be significantly smaller than the particle size of the fluid separation material to prevent the fluid separation material from being washed out of the column tube. Bead material may be filled in the tubular hole 111. The column tube 110 may be made of a stainless steel material and should be chemically inert.

Exemplary dimensions of the various components are indicated in Fig. 2.

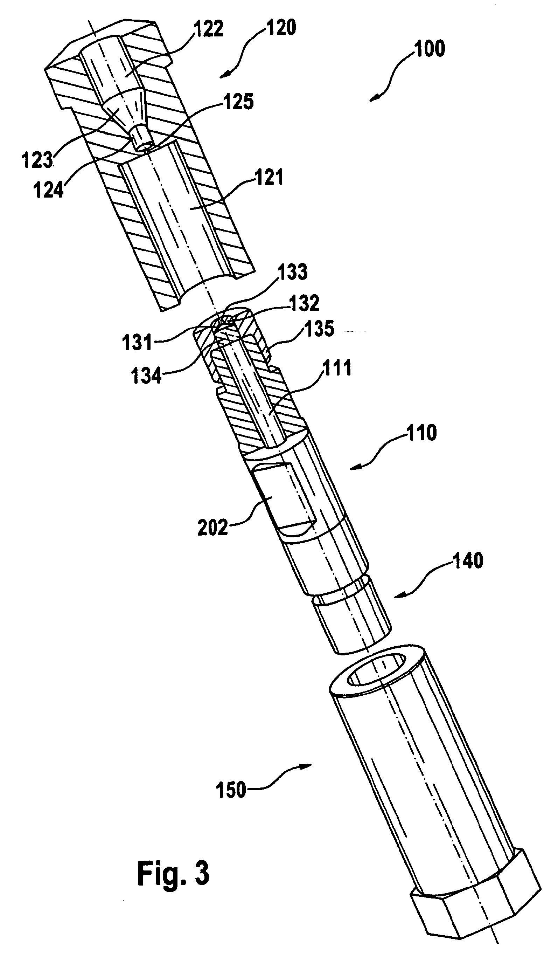

**Fig. 3** shows a three-dimensional partially disassembled state of the component shown in Fig. 1.

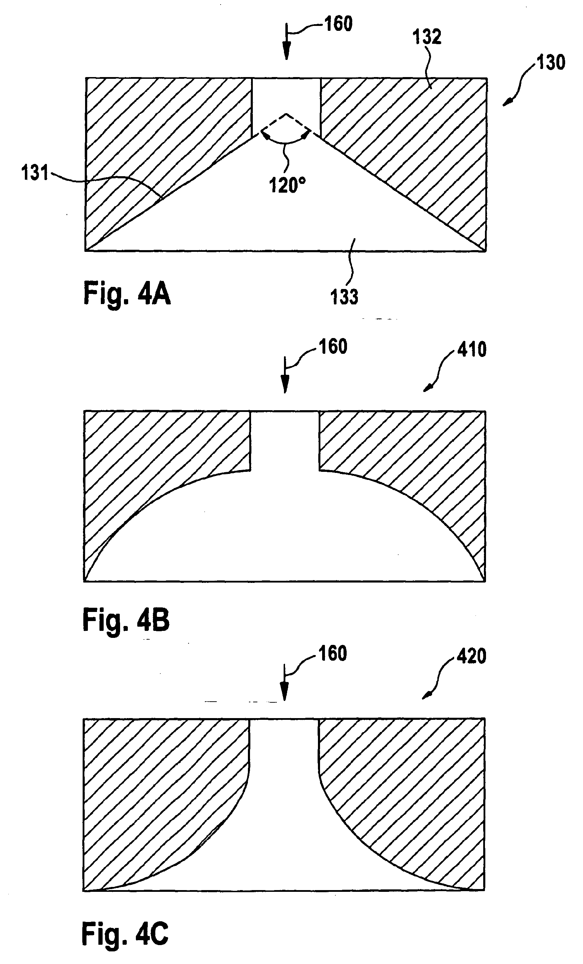

In the following, referring to Fig. 4A to Fig. 4C, intermediate pieces with different geometrical properties according to exemplary embodiments will be explained.

Starting with **Fig. 4A****,** the intermediate piece 130 shown in Fig. 1 to Fig. 3 is shown again in more detail. As can be taken from Fig. 4A, the flow-through element 132 has a tapered portion 131 defining an opening 133. However, in an upper portion of the opening 133, the flow-through hole has a constant diameter.

Advantageously, the opening angle of the tapered section 131 is approximately 120°, for instance 118.2°. This opening angle may have the consequence that a high quality performance may be achieved, since the fluid flowing through the flow-through element 132 is widened up in an optimal manner so as to cover the whole extension in a lateral direction of the beads filled in the column tube 110. Thus, the constant slope configuration of Fig. 4A with an opening angle of approximately 120° is a proper solution.

**Fig. 4B** shows an intermediate piece 410 which differs from the intermediate piece 130 in that the tapered section has, in flow direction 160, a monotonically decreasing curvature.

As can be taken from the intermediate piece 420 shown in **Fig. 4C**, the tapered section may also have a monotonically increasing curvature, with regard to the flow direction 160.

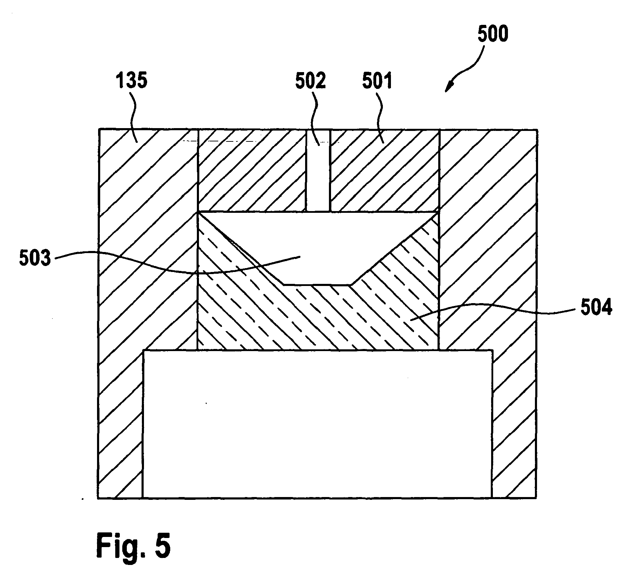

In the following, referring to **Fig. 5****,** an intermediate piece 500 according to another exemplary embodiment will be described.

According to the embodiment shown in Fig. 5, a tapered section 503 is not formed in a flow-through element 501 (as in the configuration illustrated in Fig. 1 to Fig. 4C), but is provided in a frit element 504. In the embodiment of Fig. 5, the flow-through element 501 may be dispensible or may be integrally formed with the frit element 504.

According to the configuration shown in Fig. 5, a channel 502 which may be passed by a fluid is formed in the flow-through element 501 which is, together with the frit element 504, inserted in a through hole of the sleeve element 135. The tapered section 503 is formed in the frit element 504 in the form of a recess in an upper portion of the frit element 504. Concerning the fluid distribution properties, the configuration of Fig. 5 may have a similar effect of a proper spatial distribution of the fluid like the arrangement shown in Fig. 1 to Fig. 4C.

It should be noted that the term "comprising" does not exclude other elements or steps and the "a" or "an" does not exclude a plurality. Also elements described in association with different embodiments may be combined. It should also be noted that reference signs in the claims shall not be construed as limiting the scope of the claims.

## Claims

1. An intermediate piece (130) for connection between a column tube (110), adapted for containing a fluid separation material for separating different compounds of a fluid, and a fitting element (120) adapted for fitting the column tube (110) to another element within a fluid path (160), the intermediate piece (130) comprising
a tapered section (131) adapted for spatially distributing the fluid between the fitting element (120) and the column tube (110),
a flow-through element (132) having an open channel (133) through which the fluid is transportable, and
a sleeve element (135) adapted to be put as a cap onto an end portion of the column tube and having a through hole,
**characterized in that**
the flow-through element (132) is insertable or inserted in the through hole, and
the hardness of the flow-through element (132) is higher than the hardness of the sleeve element (135).

2. The intermediate piece (130) according to claim 1, wherein
the intermediate piece (130) comprises a frit element (134), adapted for retaining the fluid separation material within the column tube (110), having pores through which the fluid is transportable, wherein the tapered section (503) is preferably formed in the frit element (504), and preferably the frit element (134) is insertable or inserted in the through hole.

3. The intermediate piece (130) according to claim 1 or any one of the above claims, comprising at least one of the following features:
the tapered section (131) is formed in or is part of the flow-through element (132);
at least a part of the tapered section (131) is formed with a slope of one of the group consisting of a constant slope, a monotonically increasing slope and a monotonically decreasing slope;
the tapered section (131) has an opening angle between 100° and 140°, between 115° and 125°, or of essentially 120°;
the other element is located upstream with respect to the column tube (110).

4. The intermediate piece (130) according to claim 1 or any one of the above claims, comprising at least one of the following features:
the sleeve element (135) has a first connection portion engageable by the fitting element (120) in a sealed manner;
the sleeve element (135) has a second connection portion for engaging the column element (110) in a sealed manner;
the sleeve element (135) is made of a material of the group consisting of a plastics material, PolyEtherEtherKetone.

5. The intermediate piece (130) according to claim 1 or any one of the above claims, comprising at least one of the following features:
the flow-through element (132) is made of a chemically inert material;
the flow-through element (132) is made of a material of the group consisting of a metallic material, stainless steel, a ceramics material, and a carbon-filled plastics material;
the frit element (134) is made of a material of the group consisting of a sintered material, sintered stainless steel.

6. A column (100) for analyzing a fluid, the column (100) comprising
a column tube (110) adapted for containing a fluid separation material for separating different compounds of a fluid;
a fitting element (120) adapted for fitting the column tube (110) to another element within a fluid path (160); and
-an intermediate piece (130) according to claim 1 or anyone of the above claims for connection between the column tube (110) and the fitting element (120).

7. The column (100) according to claim 6, wherein
the fitting element (120) comprises a first fastening element (200) and the column tube (110) comprises a second fastening element (201), wherein the fitting element (120) is fastenable at the column tube (110) by means of fastening the first fastening element (200) at the second fastening element (201) in an operation state in which the intermediate piece (130) engages the column tube (110) and is engaged by the fitting element (120), wherein preferably the first fastening element (200) and the second fastening element (201) are adapted to provide a screw connection between the fitting element (120) and the column tube (110).

8. The column (100) according to claim 6 or 7, wherein
the column (100) comprises a further intermediate piece (140) and comprises a further fitting element (150), wherein the column tube (110) has a first end portion and a second end portion, wherein the intermediate piece (130) and the fitting element (120) are connectable at the first end portion and the further intermediate piece (140) and the further fitting element (150) are connectable at the second end portion in a symmetric manner with respect to the first end portion.

9. A fluid separation system for separating compounds of a fluid, the fluid separation system comprising
an intermediate piece (130) according to claim 1 or any one of claims 2-5, or a column (100) according to claim 6, 7 or 8.

10. The fluid separation system according to claim 9, comprising at least one of the following features:
the fluid separation system is adapted to analyze at least one physical, chemical and/or biological parameter of at least one compound of the fluid;
the fluid separation system comprises at least one of a sensor device, a test device for testing a device under test or a substance, a device for chemical, biological and/or pharmaceutical analysis, a capillary electrophoresis device, a liquid chromatography device, a gas chromatography device, an electronic measurement device, and a mass spectroscopy device.

## Patentansprüche

1. Zwischenstück (130) zum Herstellen einer Verbindung zwischen einem Säulenrohr (110), das ein Flüssigkeitstrennmaterial zum Trennen verschiedener Verbindungen in einer Flüssigkeit enthält, und einem Anschlusselement (120), welches den Übergang des Säulenrohrs (110) zu einem anderen Element innerhalb eines Strömungspfades (160) herstellt, wobei das Zwischenstück (130) Folgendes aufweist:
einen angeschrägten Abschnitt (131) zum räumlichen Verteilen der Flüssigkeit zwischen dem Anschlusselement (120) und dem Säulenrohr (110),
ein Durchflusselement (132) mit einem offenen Kanal (133), durch welchen die Flüssigkeit befördert werden kann, und
ein Buchsenelement (135), das als Kappe auf einen Endteil des Säulenrohrs aufgesetzt wird und eine Durchgangsbohrung aufweist,
**dadurch gekennzeichnet, dass**
das Durchflusselement (132) in die Durchgangsbohrung eingesetzt werden kann oder eingesetzt wird, und
die Härte des Durchflusselements (132) größer als die Härte des Buchsenelements (135) ist.

2. Zwischenstück (130) nach Anspruch 1, wobei
das Zwischenstück (130) ein Frittenelement (134) aufweist, welches das Flüssigkeitstrennmaterial innerhalb des Säulenrohrs (110) zurückhält und Poren aufweist, durch welche die Flüssigkeit befördert werden kann, wobei der angeschrägte Abschnitt (503) vorzugsweise im Frittenelement (504) gebildet ist und das Frittenelement (134) vorzugsweise in die Durchgangsbohrung eingesetzt werden kann oder eingesetzt wird.

3. Zwischenstück (130) nach Anspruch 1 oder einem der obigen Ansprüche, das mindestens eines der folgenden Merkmale aufweist:
der angeschrägte Abschnitt (131) ist im Durchflusselement (132) gebildet oder dessen Bestandteil;
mindestens ein Teil des angeschrägten Abschnitts (131) ist mit einem Anstieg aus der Gruppe gebildet, zu welcher ein konstanter Anstieg, ein monoton zunehmender Anstieg und ein monoton abfallender Anstieg gehören;
der angeschrägte Abschnitt (131) weist einen Öffnungswinkel zwischen 100° und 140°, zwischen 115° und 125° oder im Wesentlichen von 120° auf;
das andere Element ist in Strömungsrichtung vor dem Säulenrohr (110) angeordnet.

4. Zwischenstück (130) nach Anspruch 1 oder einem der obigen Ansprüche, das mindestens eines der folgenden Merkmale aufweist:
das Buchsenelement (135) weist einen ersten Verbindungsteil auf, der so mit dem Anschlusselement (120) gekoppelt werden kann, dass eine Abdichtung entsteht;
das Buchsenelement (135) weist einen zweiten Verbindungsteil auf, der so mit dem Säulenelement (110) gekoppelt werden kann, dass eine Abdichtung entsteht;
das Buchsenelement (135) ist aus einem Material aus der Gruppe hergestellt, zu der ein Kunststoffmaterial, ein Polyether-Etherketon, gehört.

5. Zwischenstück (130) nach Anspruch 1 oder einem der obigen Ansprüche, das mindestens eines der folgenden Merkmale aufweist:
das Durchflusselement (132) ist aus einem chemisch inerten Werkstoff hergestellt;
Das Durchflusselement (132) ist aus einem Werkstoff aus der Gruppe hergestellt, zu der ein metallischer Werkstoff, Edelstahl, ein keramischer Werkstoff und ein mit Kohlenstofffasern gefüllter Kunststoff gehören;
das Frittenelement (134) ist aus einem Material aus der Gruppe hergestellt, zu der ein gesinterter Werkstoff, gesinterter Edelstahl, gehört.

6. Säule (100) zum Analysieren einer Flüssigkeit, wobei die Säule (100) Folgendes aufweist:
ein Säulenrohr (110), das ein Flüssigkeitstrennmaterial zum Trennen verschiedener Verbindungen einer Flüssigkeit enthält;
ein Anschlusselement (120), welches den Übergang des Säulenrohrs (110) zu einem anderen Element innerhalb eines Strömungspfades (160) herstellt; und
ein Zwischenstück (130) nach Anspruch 1 oder einem der obigen Ansprüche zum Herstellen einer Verbindung zwischen dem Säulenrohr (110) und einem Anschlusselement (120).

7. Säule (100) nach Anspruch 6, wobei
das Anschlusselement (120) ein erstes Befestigungselement (200) aufweist und das Säulenrohr (110) ein zweites Befestigungselement (201) aufweist, wobei das Anschlusselement (120) am Säulenrohr (110) befestigt werden kann, indem das erste Befestigungselement (200) in einem Betriebszustand am zweiten Befestigungselement (201) befestigt wird, in welchem das Zwischenstück (130) auf das Säulenrohr (110) aufgesetzt ist und auf dem wiederum das Anschlussstück (120) aufsitzt, wobei das erste Befestigungselement (200) und das zweite Befestigungselement (201) vorzugsweise eine Schraubverbindung zwischen dem Anschlusselement (120) und dem Säulenrohr (110) bereitstellen.

8. Säule (100) nach Anspruch 6 oder 7, wobei
die Säule (100) ein weiteres Zwischenstück (140) und ein weiteres Anschlusselement (150) aufweist, wobei das Säulenrohr (110) einen ersten Endteil und einen zweiten Endteil aufweist, wobei das Zwischenstück (130) und das Anschlusselement (120) mit dem ersten Endteil verbunden werden können und wobei das weitere Zwischenstück (140) und das weitere Anschlusselement (150) symmetrisch in Bezug auf den ersten Endteil mit dem zweiten Endteil verbunden werden können.

9. Flüssigkeitstrennsystem zum Trennen von Verbindungen einer Flüssigkeit, wobei das Flüssigkeitstrennsystem Folgendes aufweist:
ein Zwischenstück (130) nach Anspruch 1 oder einem der Ansprüche 2 bis 5 oder eine Säule (100) nach Anspruch 6, 7 oder 8.

10. Flüssigkeitstrennsystem nach Anspruch 9, das mindestens eines der folgenden Merkmale aufweist:
das Flüssigkeitstrennsystem kann mindestens einen physikalischen, chemischen und/oder biologischen Parameter oder mindestens eine Komponente der Flüssigkeit analysieren;
das Flüssigkeitstrennsystem weist mindestens eine Sensoreinheit, eine Testeinheit zum Testen einer zu testenden Einheit oder einer Substanz, eine Einheit für die chemische, biologische und/oder pharmazeutische Analyse, eine Kapillarelektrophoreseeinheit, eine Flüssigkeitschromatographieeinheit, eine Gaschromatographieeinheit, eine elektronische Messeinheit oder eine Massenspektrometrieeinheit auf.

## Revendications

1. Pièce intermédiaire (130) pour le raccordement entre un tube en colonne (110) conçu pour contenir un matériau séparateur de fluides destiné à séparer différents composants d'un fluide et un élément adaptateur (120) conçu pour adapter le tube en colonne (110) à un autre élément sur la voie du fluide (160), ladite pièce intermédiaire (130) comprenant
une section tronconique (131) conçue pour distribuer le fluide entre l'élément adaptateur (120) et le tube en colonne (110),
un élément d'écoulement (132) présentant un canal ouvert (133) à travers lequel le fluide est transportable et
un élément de manchon (135) conçu pour faire office de capuchon sur une extrémité du tube en colonne et présentant un orifice traversant,
**caractérisée en ce que**
l'élément d'écoulement (132) est insérable ou inséré dans l'orifice traversant et
la dureté de l'élément d'écoulement (132) est supérieure à la dureté de l'élément de manchon (135).

2. Pièce intermédiaire (1330) selon la revendication 1, dans laquelle
la pièce intermédiaire (130) comprend un élément fritté (134) conçu pour retenir le matériau séparateur de fluides dans le tube en colonne (110), présentant des pores à travers lesquels le fluide est transportable, la section tronconique (503) étant de préférence formée dans l'élément fritté (504) et l'élément fritté (134) étant de préférence insérable ou inséré dans l'orifice traversant.

3. Pièce intermédiaire (130) selon la revendication 1 ou l'une quelconque des revendications ci-dessus, comprenant au moins l'une des caractéristiques suivantes :
la section tronconique (131) est formée ou fait partie de l'élément d'écoulement (132) ;
au moins une partie de la section tronconique (131) présente une inclinaison soit constante, soit régulièrement croissante, soit régulièrement décroissante ;
la section tronconique (131) présente un angle d'ouverture compris entre 100° et 140°, de préférence entre 115° et 125° et idéalement de 120° ;
l'autre élément est situé en amont par rapport au tube en colonne (110).

4. Pièce intermédiaire (130) selon la revendication 1 ou l'une quelconque des revendications ci-dessus, comprenant au moins l'une des caractéristiques suivantes :
l'élément de manchon (135) comporte une première portion de raccordement sur laquelle l'élément adaptateur (120) peut être engagé de façon scellée ;
l'élément de manchon (135) comporte une deuxième portion de raccordement destinée à être engagée sur l'élément de colonne (110) de façon scellée ;
l'élément de manchon (135) est fabriqué en un matériau plastique ou en polyéthercétone.

5. Pièce intermédiaire (130) selon la revendication 1 ou l'une quelconque des revendications ci-dessus, comprenant au moins l'une des caractéristiques suivantes :
l'élément d'écoulement (132) est fabriqué dans un matériau chimiquement inerte ;
l'élément d'écoulement (132) est fabriqué dans un matériau métallique, en acier inoxydable, en céramique ou dans une matière plastique à base de carbone;
l'élément fritté (134) est fabriqué dans un matériau fritté ou en acier inoxydable fritté.

6. Colonne (100) pour l'analyse d'un fluide, ladite colonne (100) comprenant
un tube en colonne (110) conçu pour contenir un matériau séparateur de fluides destiné à séparer différents composants d'un fluide ;
un élément adaptateur (120) conçu pour adapter le tube en colonne (110) à un autre élément sur la voie du fluide (160) et
une pièce intermédiaire (130) selon la revendication 1 ou l'une quelconque des revendications ci-dessus, destinée au raccordement entre le tube en colonne (110) et l'élément adaptateur (120).

7. Colonne (100) selon la revendication 6, dans laquelle
l'élément adaptateur (120) comprend un premier élément de fixation (200) et le tube en colonne (110) comprend un deuxième élément de fixation (201), l'élément de fixation (120) pouvant être fixé au tube en colonne (110) par la fixation du premier élément de fixation (200) au deuxième élément de fixation (201) dans un état de fonctionnement tel que la pièce intermédiaire (130) s'engage dans le tube en colonne (110) et que l'élément adaptateur (120) s'engage sur elle, le premier élément de fixation (200) et le deuxième élément de fixation (201) étant conçus pour fournir un raccordement vissé entre l'élément de fixation (120) et le tube en colonne (110).

8. Colonne (100) selon la revendication 6 ou 7, dans laquelle
ladite colonne (100) comprend une autre pièce intermédiaire (140) et comprend un autre élément adaptateur (150), le tube en colonne (110) présentant une première extrémité et une seconde extrémité, la pièce intermédiaire (130) et l'élément adaptateur (120) étant raccordables à la première extrémité et l'autre pièce intermédiaire (140) et l'autre élément adaptateur (150) étant raccordables à la deuxième extrémité, de façon symétrique par rapport à la première extrémité.

9. Système séparateur de fluides pour la séparation de composants d'un fluide, ledit système séparateur comprenant
une pièce intermédiaire (130) selon la revendication 1 ou l'une quelconque des revendications 2 à 5 ou une colonne (100) selon l'une quelconque des revendications 6, 7 ou 8.

10. Système séparateur de fluides selon la revendication 9, présentant au moins l'une des caractéristiques suivantes :
ledit système séparateur est conçu pour analyser au moins un paramètre physique, chimique et/ou biologique d'au moins l'un des composants du fluide,
ledit système séparateur de fluides comprend au moins un dispositif capteur, un dispositif testeur pour tester le dispositif en cours de test ou une substance, un dispositif d'analyse chimique, biologique et/ou pharmaceutique, un dispositif d'électrophorèse capillaire, un dispositif de chromatographie en phase liquide, un dispositif de chromatographie en phase gazeuse, un dispositif de mesure électronique et un dispositif de spectroscopie de masse.
